(19) Europäisches Patentamt
European Patent Office
Office européen des brevets

(11) **EP 2 648 001 A1**

(12) **EUROPEAN PATENT APPLICATION**
published in accordance with Art. 153(4) EPC

(43) Date of publication:
**09.10.2013 Bulletin 2013/41**

(51) Int Cl.:
**G01P 3/49** (2006.01)     **G01B 7/00** (2006.01)
**G01D 5/245** (2006.01)

(21) Application number: **12728361.2**

(22) Date of filing: **31.01.2012**

(86) International application number:
**PCT/JP2012/052111**

(87) International publication number:
**WO 2013/114564 (08.08.2013 Gazette 2013/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Applied Electronics Corporation
Tama-ku
Kawasaki-City
Kanagawa 214-0023 (JP)**

(72) Inventors:
• **SHOJI Kazuichi
Kawasaki-City
Kanagawa 214-0023 (JP)**

• **TOMONARI Kengo
Kawasaki-City
Kanagawa 214-0023 (JP)**
• **IWAMOTO Hironori
Kawasaki-City
Kanagawa 214-0023 (JP)**

(74) Representative: **Klunker . Schmitt-Nilson . Hirsch
Patentanwälte
Destouchesstrasse 68
80796 München (DE)**

(54) **EDDY CURRENT SENSOR AND TURBO CHARGER ROTATION DETECTING DEVICE USING SAME**

(57)     [Problem]
An object of the present invention is to provide an eddy current sensor that is capable of accurately detecting the number of revolutions of a turbocharger with an inexpensive and compact construction and without driving up the manufacturing cost and simultaneously provide a turbocharger rotation detection apparatus using the same.
[Means for solving the problem]

The present invention is an eddy current sensor that forms a resonance circuit comprised of a coil disposed proximal to a target and a capacitor and measures a displacement based on a change in voltage generated by a relative movement between the target and the coil, formed by winding the coil on a columnar ferrite core, further, the present invention equips a compressor of a turbocharger with the eddy current sensor and detects the number of revolutions of the turbocharger.

FIG.15

EP 2 648 001 A1

**Description**

Technical Field

The present invention relates to an eddy current sensor that is compact and inexpensive and a turbocharger rotation detection apparatus using the same, and in particular to a turbocharger rotation detection apparatus that is capable of certainly detecting the number of revolutions or a revolution speed of a turbocharger even under bad conditions such as high temperature, high speed and so on by improving detection sensitivity of an eddy current sensor and concurrently using the eddy current sensor having a sensor top portion.

Background Art

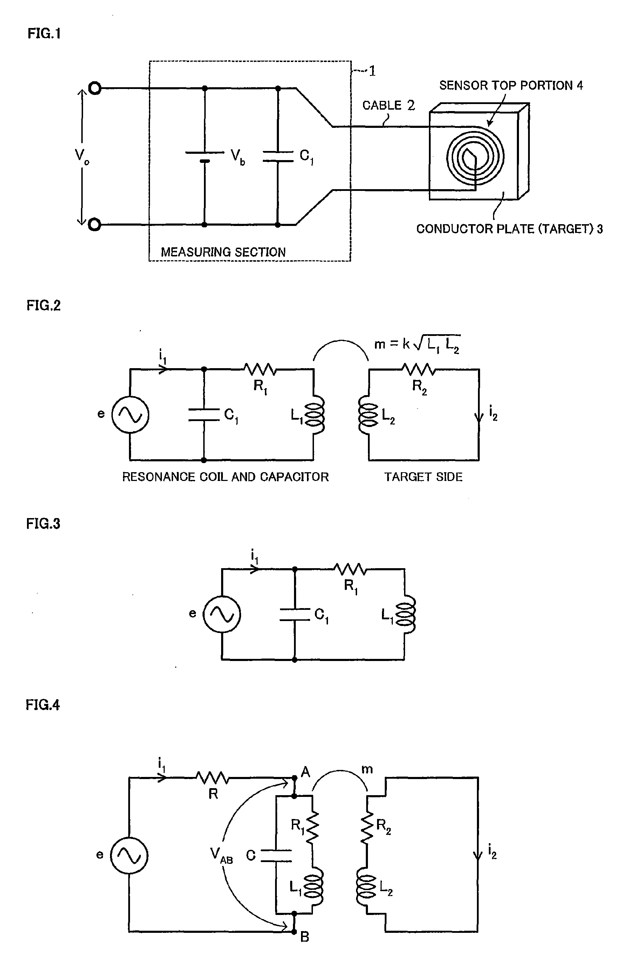

Heretofore, an eddy current sensor is known as a sensor that measures displacements (such as variations in intervals and shifting of intervals) of an object to be measured (a target) such as a conductor plate in a non- contact way.
In general, by moving a conductor within a magnetic field or varying the magnetic field that penetrates through the whole conductor, an inductive voltage is generated in the conductor. In the case of the conductor with an extent, depending on this inductive voltage, a current becomes a circular pattern around magnetic flux and an eddy current flows, and then this eddy current becomes thermal energy by means of conductor resistance. This loss is an eddy current loss, and the eddy current sensor measures displacements of the conductor by detecting the eddy current loss. Although various types of the eddy current sensor exist, one example of a resonance type eddy current sensor that is capable of being inexpensively comprised, will be described with reference to FIG. 1.
In the resonance type eddy current sensor shown in FIG.1, an oscillation circuit is comprised of a capacitor $C_1$ that is connected to a direct current voltage supply Vb of a measuring section 1 side and an inductance of a sensor top portion 4 that is disposed on opposite side of a conductor plate (a target) 3 of a measured side via a cable 2, such oscillation circuit oscillates high-frequency signals (a few MHz) in a given frequency and a given amplitude value (an alternating current voltage). As shown in FIG.2, an electrical equivalent circuit of such constitution is that an equivalent circuit (a current $i_1$) comprised of a resonance coil $L_1$ and the capacitor $C_1$ and an equivalent circuit (a current $i_2$) of the target 3 side are connected in a mutual inductance $m(= k\sqrt{L_1 \cdot L_2})$ (where k is a coefficient of coupling).
In the above equivalent circuit, in the case of setting $\omega$ as an angular frequency (=$2\pi f$), impedances Z1, Z2 and Zm can be represented by the following Expression 1.

$$[\text{Expression 1}]$$

$$Z1 = R_1 + j\omega L_1$$

$$Z2 = R_2 + j\omega L_2$$

$$Zm = j\omega m$$

And then, the alternating current $i_1$ of the measuring section 1 side is represented by the following Expression 2, and the alternating current $i_2$ of the target 3 side is represented by the following Expression 3.

$$[\text{Expression 2}]$$

$$i_1 = Z2/(Z1 \cdot Z2 - Zm^2) \cdot e$$

$$[\text{Expression 3}]$$

$$i_2 = Zm/(Z1 \cdot Z2 - Zm^2) \cdot e$$

A synthetic impedance Z viewed from the measuring section 1 side is represented by the following Expression 4.

[Expression 4]

$$Z = e/i_1 = Z1 - Zm^2/Z2$$

Here, the following Expression 5 can be obtained by substituting Expression 1 into Expression 4.

[Expression 5]

$$Z = R_1 + j\omega L_1 - (j\omega m)^2/(R_2 - j\omega L_2)$$

$$= R_1 + j\omega L_1 + \omega^2 m^2/(R_2 + j\omega L_2)$$

$$= R_1 + j\omega L_1 + \omega^2 m^2/(R_2{}^2 + \omega^2 L_2{}^2) \cdot (R_2 - j\omega L_2)$$

$$= (R_1 + \omega^2 m^2/(R_2{}^2 + \omega^2 L_2{}^2) \cdot R_2) + j\omega(L_1 - \omega^2 m^2/(R_2{}^2 + \omega^2 L_2{}^2) \cdot L_2)$$

The first item of final item of Expression 5 represents a resistance component, and the second item of the final item of Expression 5 represents a reactance component.

Here, when the target 3 became infinitely far away, the equivalent circuit becomes a circuit shown in FIG. 3. In this case, an impedance $Z_0$ becomes Expression 6.

[Expression 6]

$$Z_0 = R_1 + j\omega L_1$$

By comparing Expression 6 with Expression 5, it is clear that when the target circuit is connected by the mutual inductance m, the resistor component $R_1$ is changed to "$R_1 + \omega^2 m^2/(R_2{}^2 + \omega^2 L_2{}^2) \cdot R_2$", that is to say, the resistor component $R_1$ changes as having increased, and further, the reactance component $L_1$ is changed to "$L_1 - \omega^2 m^2/(R_2{}^2 + \omega^2 L_2{}^2) \cdot L_2$", that is to say, the reactance component $L_1$ changes as having decreased.

Here, when using a constant- current power supply as the power supply e, a voltage $V_{AB}$ of FIG. 4 becomes a function f of the resistance $R_2$ of the target 3, the reactance $L_2$ of the target 3 and the mutual inductance m. That is to say, the following Expression 7 holds.

[Expression 7]

$$V_{AB} = f(m, L_2, R_2)$$

And then, since the mutual inductance m is a distance d of the target 3, the following Expression 8 holds.

[Expression 8]

$$V_{AB} = f(d, L_2, R_2)$$

Moreover, since the resistance $R_2$ and the reactance $L_2$ are a function of configuration and material of the target 3, when setting the resistance $R_2$ and the reactance $L_2$ as Pt, Expression 8 becomes Expression 9.

[Expression 9]

$$V_{AB} = f(d, Pt)$$

And then, when using the target 3 having the same configuration and the same material, Pt becomes a constant, resultingly, Expression 9 becomes the following Expression 10.

[Expression 10]

$$V_{AB} = f(d)$$

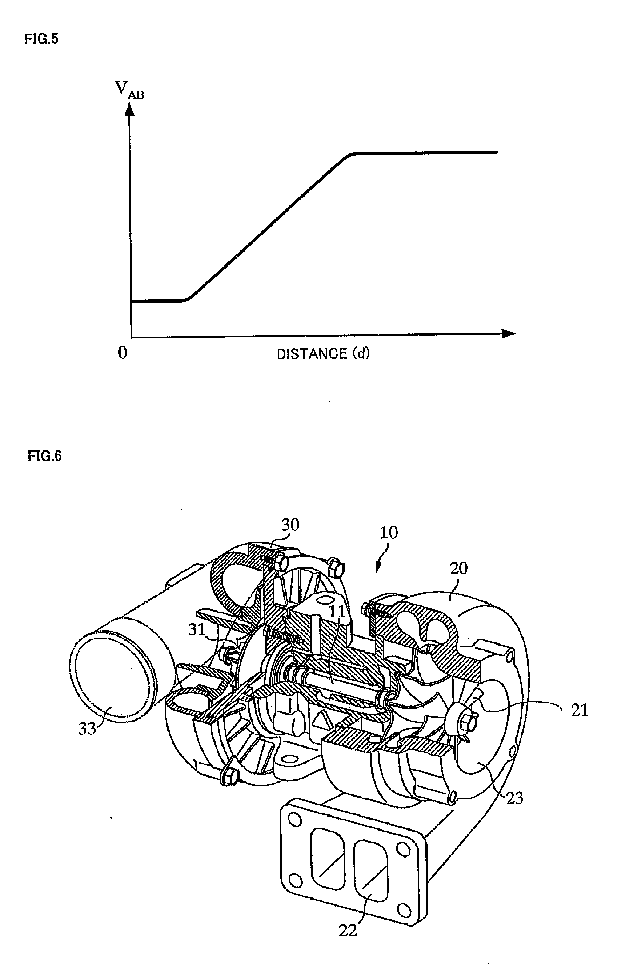

From the above, by measuring the voltage $V_{AB}$ of the resonance circuit, it is possible to detect the distance d of the target 3. For example, FIG. 5 shows one example of a relationship between the distance d and the voltage $V_{AB}$.
On the other hand, in internal-combustion engines for automobile use etc., an output of the internal-combustion engine relates to the mass of air that can be provided to the engine for combustion and the proportionate amount of fuel, in the case of improving the output of the internal-combustion engine, more combustion air and more fuel have to be supplied. A turbocharger is known as a super charger for realizing output improvement etc. without growing in size. The turbocharger is mainly comprised of a fluid compressor and a turbine, and the fluid compressor and the turbine are connected by a common shaft and revolve in the same number of revolutions. The turbine converts energy of exhaust fumes that generally disappears without being used into rotational energy and drives the compressor. The compressor sucks fresh air in and feeds pre-compressed air to each cylinder of the engine by pressure. The amount of fuel that is increased can be supplied to the mass of more air within the cylinder. In this way, the internal-combustion engine can emit more output.

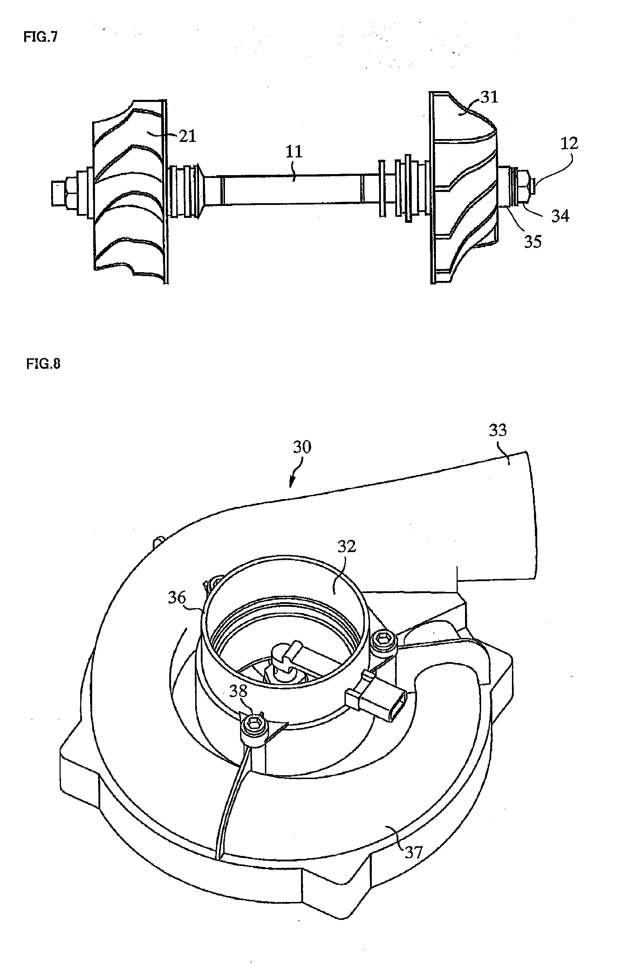

FIG.6 shows one constructional example of a general turbocharger 10 that comprises a turbine 20 and a compressor 30. As shown in FIG.6, within the compressor 30, a compressor wheel 31 is revolvably borne and connected to a turboshaft 11. The turboshaft 11 is also revolvably borne, and the other end of the turboshaft 11 is connected to a turbine wheel 21. By high-temperature exhaust fumes being made to flow into the turbine 20 from the internal-combustion engine (not shown) via a turbine entrance 22, the turbine wheel 21 revolves. A stream of the exhaust fumes flows out from the turbine 20 through a turbine exit 23. Since the turbine wheel 21 is connected to the compressor wheel 31 via the turboshaft 11, in this way, the turbine 20 drives the compressor 30. Within the compressor 30, air is sucked in through an air entrance 32 (FIG.8), compressed, and supplied to the internal-combustion engine via an air exit 33.
FIG. 7 shows a connection relationship among the turbine wheel 21, the turboshaft 11 and the compressor wheel 31, and the turbine wheel 21 is generally comprised of heat-resisting austenitic nickel compounds. The turbine wheel 21 is manufactured by precision casting, and connected to the turboshaft 11 that is generally comprised of heat-treated steel by such a method as friction welding method. A component part that is comprised of the turbine wheel 21 and the turboshaft 11, is called as "a rotor" or "a body of revolution". For example, the compressor wheel 31 is made of aluminum alloys by means of precision casting etc.. The compressor wheel 31 is fixed on an end portion 12 of the compressor side of the turboshaft 11 by a fixing element 34. For example, a hexagon cap nut 35 can use as the fixing element 34. The hexagon cap nut 35 firmly fastens the turbine wheel 21 with respect to a turboshaft collar by means of a seal bush, a bearing collar and a spacer bush. Therefore, the body of revolution forms a hard unit with the compressor wheel 31.
FIG. 8 shows the compressor 30 that comprises the air entrance 32 and the air exit 33, and a cylindrical adapter 36 is disposed on the air entrance 32. The cylindrical adapter 36 is connected to a spiral compressor housing 37 for example by means of a clincher 38.

The List of Prior Art Documents

Patent Documents

Patent Document 1:    Japanese Patent Application Laid-Open No.2008-506074
Patent Document 2:    Japanese Patent Application Laid-Open No.2007-89336

Summary of the Invention

Problems to be Solved by the Invention

Although engine control etc. needs the number of revolutions of the turbocharger, when the number of revolutions of the turbocharger reaches as high as two hundred thousand - five hundred thousand rpm and temperature also becomes 500 - 1000 degrees C, since measuring environment is severe, it is very difficult to directly measure the number of revolutions of the compressor wheel or the turbine wheel.

Therefore, in Japanese Patent Application Laid- Open No. 2008- 506074 (Patent Document 1), an apparatus for detecting the number of revolutions of the turboshaft is disclosed. In the apparatus disclosed in Patent Document 1, the end portion of the compressor side of the turboshaft is provided with an element for varying the magnetic field, change in the magnetic field is generated in connection with revolutions of the turboshaft, a sensor element is disposed on the vicinity of the element for varying the magnetic field, and the sensor element detects the change in the magnetic field.

However, in the detection of the number of revolutions of the turboshaft according to Patent Document 1, the end portion of the compressor side of the turboshaft has to be equipped with the element for varying the magnetic field, since the shaft diameter of the turboshaft is small, it is impossible to enlarge the element, as a result, it is impossible to sensitively detect the change in the magnetic field. Further, since the sensor element blocks the flow of air, performance degradation of the turbocharger is caused. Therefore, the manufacturing cost of the turbocharger increases, and simultaneously there is a problem in respect to detection accuracy.

Further, in the Japanese Patent Application Laid- Open No. 2007- 89336 (Patent Document 2), an apparatus that provides a turboshaft with a sensorless permanent magnet synchronous motor, and switches and uses a rotation state estimating means that estimates a rotation state during driving the sensorless permanent magnet synchronous motor based on a motor drive current detected by a drive current detecting means and a rotation state detecting means that detects a rotation state during not driving the sensorless permanent magnet synchronous motor, is disclosed. In the apparatus of Patent Document 2, it is necessary to equip with a large- size sensorless permanent magnet synchronous motor, and simultaneously there is a problem that a necessary means for controlling the large- size sensorless permanent magnet synchronous motor has to be separately equipped with.

The present invention has been developed in view of the above described circumstances, and an object of the present invention is to provide an eddy current sensor that is capable of accurately detecting the number of revolutions of a turbocharger with an inexpensive construction and without driving up the manufacturing cost, and simultaneously provide a turbocharger rotation detection apparatus that is capable of detecting a revolution speed (the number of revolutions) of a turbocharger with a simple construction using the same.

Means for Solving the Problems

The present invention relates to an eddy current sensor that forms a resonance circuit comprised of a coil disposed proximal to a target and a capacitor and measures a displacement based on a change in voltage generated by a relative movement between said target and said coil, the above-described object of the present invention is achieved by that said eddy current sensor is formed by winding said coil on a columnar ferrite core.

The above-described object of the present invention is more effectively achieved by that wherein with respect to said target, a surface of said coil and a surface of said ferrite core become the same plane; or wherein with respect to said target, a front end of said ferrite core projects from a surface of said coil.

Further, the present invention relates to a turbocharger rotation detection apparatus for detecting revolutions of a turbocharger comprised of a turbine and a processor that a turbine wheel within said turbine and a compressor wheel within said compressor are connected by a turboshaft, the above- described object of the present invention is achieved by that said turbocharger rotation detection apparatus equips said compressor with an eddy current sensor that is covered with a cylindrical outer bushing and formed by winding a coil on a columnar ferrite core, and simultaneously disposes so that a sensor top portion of said eddy current sensor is located proximal to a rotational surface of a blade of said compressor wheel, connects said eddy current sensor and a resonance circuit with a balanced type shield wire or coaxial cable, and detects a revolution speed of said turbocharger depending on a change in voltage of said eddy current sensor that is based on revolutions of said blade.

The above-described object of the present invention is more effectively achieved by that wherein with respect to said blade, a front end of said ferrite core projects from a surface of said coil; or wherein a detection circuit comprises a detector circuit that extracts a signal component from said resonance circuit and a digitalized circuit that amplifies said signal component extracted by said detector circuit by an amplifier and converts to a pulse signal; or wherein said pulse signal is divided, and one pulse is outputted with respect to for example one revolution of said turbocharger.

Effects of the Invention

According to an eddy current sensor of the present invention, since a ferrite core is inserted inside a coil, it is possible to enlarge sensitivity and realize downsizing without enlarging the number of turns of the coil. Further, in a projecting type eddy current sensor according to the present invention that a front end of the ferrite core projects from the surface of the coil, since the projecting type eddy current sensor can be disposed proximal to even a curved target, it is possible to perform a assured detection without lowering the detection accuracy.
Moreover, a turbocharger rotation detection apparatus according to the present invention, equips a compressor of a turbocharger with an eddy current sensor that is covered with a cylindrical outer bushing and formed by winding a coil on a columnar ferrite core, and simultaneously disposes so that a sensor top portion of the eddy current sensor is located proximal to a rotational surface of a blade of a compressor wheel, connects a resonance circuit and a detection circuit of the eddy current sensor with a balanced type shield wire or coaxial cable, and detects a revolution speed of the turbocharger depending on a change in voltage of the eddy current sensor that is caused by the revolution of the blade. Since it is possible to dispose so that the sensor top portion of the eddy current sensor is located proximal to the blade, it is possible to enhance the detection accuracy and it is also easy to equip the compressor with the eddy current sensor. Since it is also unnecessary to equip with a magnet for detection and a motor, the constitution of the turbocharger rotation detection apparatus is simple and it is possible to inexpensively constitute the turbocharger rotation detection apparatus.

Brief Description of the Drawings

In the accompanying drawings:

FIG. 1 is a wiring diagram showing a fundamental constitution example of a resonance type eddy current sensor;
FIG.2 is an equivalent circuit of the resonance type eddy current sensor;
FIG.3 is an equivalent circuit in the case that a target becomes infinitely far away;
FIG. 4 is an equivalent circuit for explaining the measurement principle of the eddy current sensor;
FIG.5 is a characteristic diagram showing one example of detection characteristics of the eddy current sensor;
FIG.6 is a partial cross-section structure diagram showing one constructional example of a general turbocharger;
FIG.7 is a structure diagram showing a connection relationship among a turbine wheel, a turboshaft and a compressor wheel;
FIG.8 is a perspective diagram showing one example of a compressor that comprises an air entrance and an air exit;
FIG.9 is a conceptual diagram showing the principle of an eddy current sensor of the present invention;
FIG.10 is a waveform diagram showing one characteristic example of a conventional eddy current sensor;
FIG.11 is a waveform diagram showing one characteristic example of the eddy current sensor according to the present invention;
FIG.12 is a perspective diagram showing one example of a sensor top portion of the eddy current sensor according to the present invention;
FIG. 13 is a diagram showing one cable example that connects the sensor top portion (a coil and a ferrite core) and a connector for circuits;
FIG.14 is a cross-section structure diagram showing one example that a plane type eddy current sensor according to the present invention is applied to the measurement of a turbo blade;
FIG.15 is a cross-section structure diagram showing one example that a projecting type eddy current sensor according to the present invention is applied to the measurement of the turbo blade;
FIG.16 is a waveform diagram showing one characteristic example of the plane type eddy current sensor;
FIG.17 is a waveform diagram showing one characteristic example of the projecting type eddy current sensor;
FIG.18 is a perspective diagram showing an installation structure of a turbocharger rotation sensor according to the present invention;
FIG. 19 is a cross-section diagram showing the installation structure of the turbocharger rotation sensor according to the present invention; and
FIG.20 is a block diagram showing one example of a detection circuit of the turbocharger rotation sensor according to the present invention.

Mode for Carrying Out the Invention

The present invention proposes a constitution that improves accuracy of an eddy current sensor being capable of inexpensively being constructed and simultaneously realizes downsizing. Although the principle of the eddy current sensor is described as above, in the present invention, by employing a ferrite core in a sensor top portion that a coil is wound around and simultaneously devising the shape of the ferrite core and a positional relationship with the coil of the ferrite core, even in a place where there is no room for mechanical installation space such as a turbocharger, or even in a place where environment is bad such as a high temperature place, it is possible to accurately detect the number of revolutions or a revolution speed. Further, in the present invention, a target of the eddy current sensor is not limited to a magnetic material, a conductive material such as aluminum can be used as the target of the eddy current sensor.

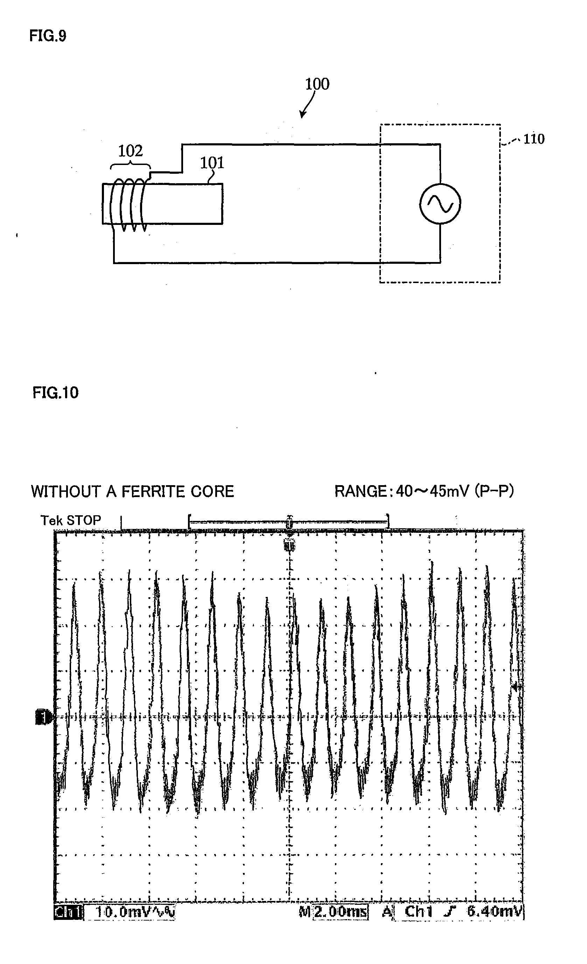

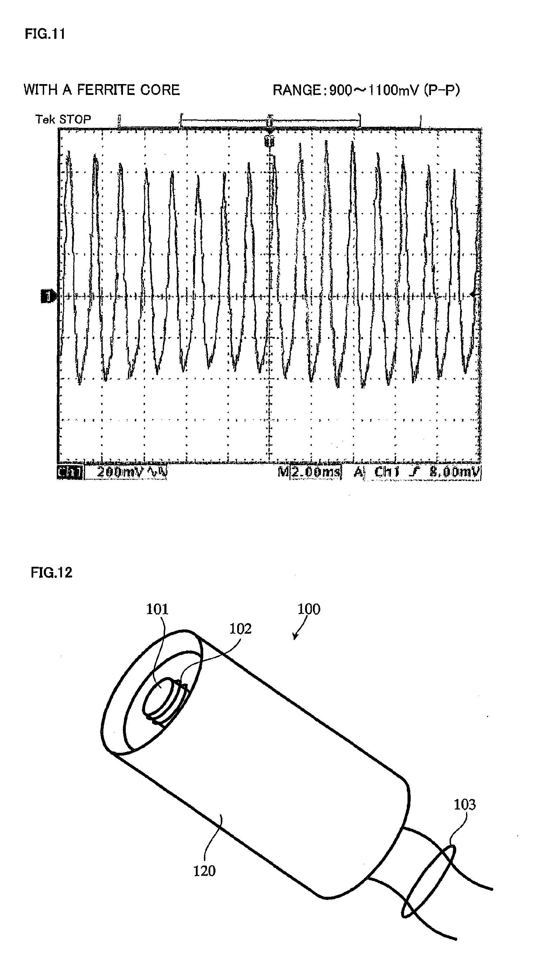

In order to enlarge the sensitivity of a resonance type eddy current sensor, although it is possible to enlarge the number of turns of the coil, in the case of enlarging the number of turns of the coil, the size of the sensor top portion becomes large, and it is impossible to apply to a field that there is no room for installation space such as the turbocharger. Therefore, in the present invention, as shown in FIG.9, by winding a coil 102 on a front end of a columnar ferrite core 101 and forming a resonance circuit 110, an eddy current sensor 100 that is compact and capable of obtaining a high sensitivity output even in the case that the number of turns of the coil 102 is small, is obtained. FIG.10 shows one example of output waveforms of the eddy current sensor 100 in the case that there is no the ferrite core 101, and FIG. 11 shows one example of output waveforms of the eddy current sensor 100 in the case that there is the ferrite core 101 and the number of turns of the coil 102 is the same as that of FIG. 10. With respect to the waveform of FIG.10, its range is 40 - 50mV(P-P), on the other hand, with respect to Fig. 11, its range is 900 - 1100mV (P-P). It is clear that the sensitivity of the eddy current sensor 100 rises approximately 20 - 25 times by inserting the ferrite core 101.

Further, in the present invention, with respect to a relationship between the ferrite core 101 and a winded-place of the coil 102, even in the case of being disposed on opposite side of a curved surface such as a blade of the turbocharger (a turbo blade), the present invention makes it possible to certainly measure revolutions (passage of the sensor) of the blade that revolves at high speed and simultaneously has a structure that is easy for installation. FIG. 12 is a perspective diagram of the sensor top portion, the ferrite core 101 is embedded into a cylindrical outer bushing 120 (for example its diameter is 4.6mØ), and simultaneously the coil 102 is wound around the front end of the ferrite core 101, an integral structure is obtained by mold etc., and the coil 102 and a measurement section are connected by a lead wire 103. Since the eddy current sensor 100 is made within the outer bushing 120 in the form of the integral structure, it becomes easy to equip the turbocharger with the eddy current sensor 100.

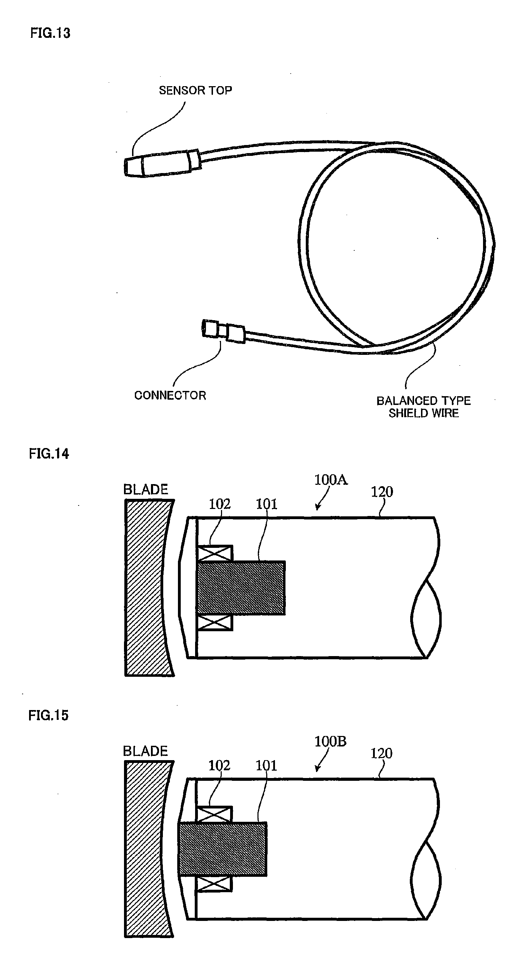

As described above, the measurement principle of the eddy current sensor 100 is to detect the displacement of the target by measuring a change in a resonance voltage that is supplied to the coil 102. In the actual measurement, the lead wire 103 for connection is necessary between the coil 102 that is wound around the ferrite core 101 and an oscillation circuit, although the length of the lead wire 103 depends on the size of the target to be measured, in the case of a long lead wire 103, sometimes the lead wire 103 of several tens of meters or more becomes necessary. In this case, a reactance of the coil 102, an equivalent resistance of the target and a resistance caused by iron loss of the ferrite core 101 are affected by a reactance component and a resistance component of the lead wire 103 and become factors of measurement errors. Therefore, in order to lower such influences as much as possible, as shown in FIG.13, by connecting the sensor top portion and a connector by a balanced type shield wire or coaxial cable and simultaneously connecting with a connector of a remote control unit by the connector, a detection signal showing a change in the amount of the eddy current of the target is transmitted to the remote control unit without being affected by an impedance and so on.

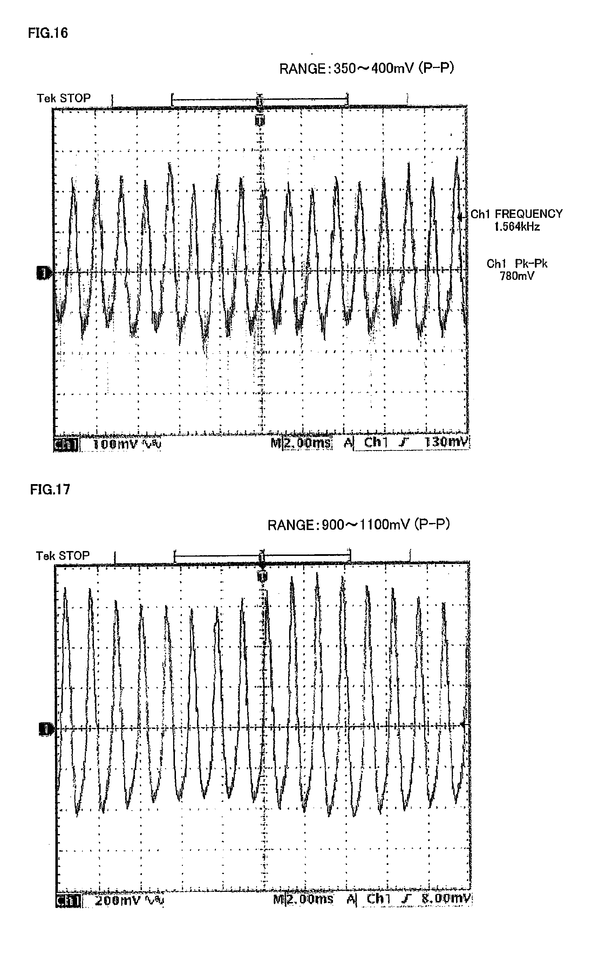

Further, in the present invention, a relationship between a surface position of the ferrite core 101 and a front end portion of the coil 102 that is wound around the ferrite core 101, is set as a relationship that is capable of most enhancing the detection sensitivity. FIG. 14 shows a case that one constructional example of a plane type eddy current sensor 100A is disposed on the opposite side of the blade (the turbo blade), and the surface of the wound plane of the coil 102 and the front end of the ferrite 101 are adjusted to the same plane. In the case of the plane type eddy current sensor 100A, a distance between the surface of the ferrite core 101 and the blade is about 1.0mm. FIG. 15 shows a case that one constructional example of a projecting type eddy current sensor 100B is disposed on the opposite side of the blade, and the front end of the ferrite core 101 projects forward from the surface of the wound plane of the coil 102. In the case of the projecting type eddy current sensor 100B, the distance between the surface of the ferrite core 101 and the blade is about 0.4mm. In the case of the plane type eddy current sensor 100A, it is impossible to move the front end of the ferrite core 101 closer to the surface of the blade, on the other hand, in the case of the projecting type eddy current sensor 100B, it is possible to move the front end of the ferrite core 101 closer to the surface of the blade. As a result, with respect to detection waveforms, in the case of the plane type eddy current sensor 100A, as shown in FIG. 16, the range of the output waveform is 350- 400mV (P- P), on the other hand, in the case of the projecting type eddy current sensor 100B, as shown in FIG. 17, the range of the output waveform is 900 ~ 1100mV (P- P) . Therefore, it is clear that the projecting type eddy current sensor 100B has a sensitivity that is equal to about 3 times of sensitivity of the plane type eddy current sensor 100A.

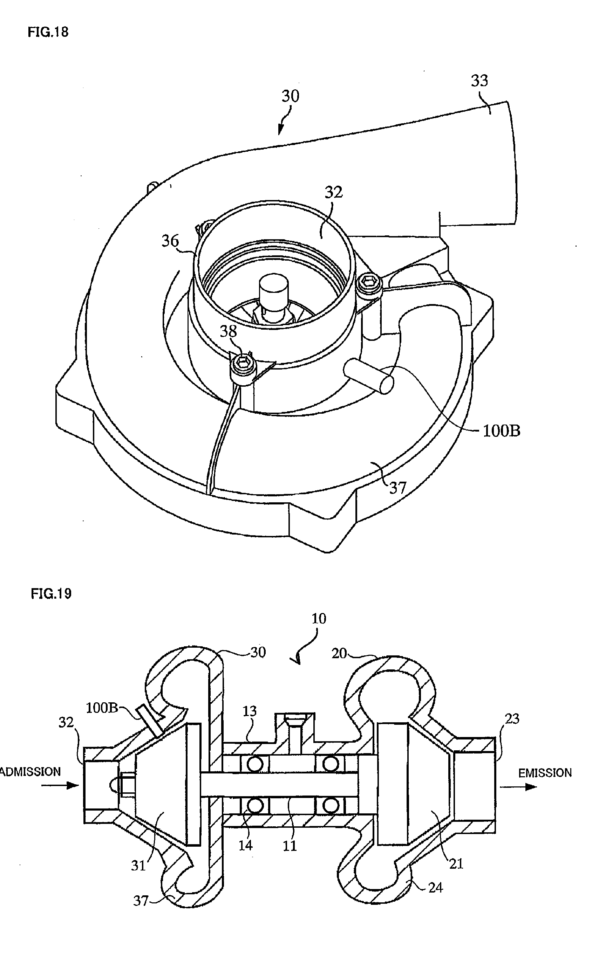

In the present invention, the above-described projecting type eddy current sensor 100B is used as a rotation sensor of the turbocharger, and the compressor 30 of the turbocharger is equipped with this eddy current sensor 100B as shown in FIG.18 and FIG.19. That is to say, FIG.18 shows the compressor 30 in perspective to correspond to FIG. 8, and in the present invention, the air entrance 32 of the compressor 30 is equipped with the eddy current sensor 100B so that the eddy current sensor 100B is located on the opposite side of the rotational plane of the blade of the compressor wheel 31. With respect to equipping with the eddy current sensor 100B, for example, it can be achieved by opening a given hole in the neighborhood of the air entrance 32 of the compressor 30 , and fitting the outer bushing 120 of the eddy current sensor 100B into the given hole, or screwing with them, or fixing them by welding.

FIG. 19 is a cross-section diagram showing the turbocharger 10 to correspond to FIG.6. As shown in FIG.19, the turbocharger 10 comprises a turbine 20 that is rotary driven by an emission gas stream of the engine, a compressor 30 that pressurizes incoming air that is rotary driven by revolutions of the turbine 20, and a turboshaft 11 that connects the turbine 20 and the compressor 30. Further, a bearing 14 that revolvably bears the turboshaft 11 in the radial direction, is housed within a housing 13. The turbine 20 comprises a turbine wheel 21 having a plurality of turbine blades and a turbine housing 24 that is a portion housing the turbine wheel 21 within the housing 13. Further, the compressor 30 comprises a compressor wheel 31 having a plurality of compressor blades (for example, 5 - 12 compressor blades) and a compressor housing 37 that is a portion housing the compressor wheel 31 within the housing 13. The eddy current sensor 100B passes through the compressor housing 37 and is equipped with by fitting into, screwing with or welding, and the sensor top of the eddy current sensor 100B is equipped with so as to get closer to the rotational plane of the blade (for example, as shown in FIG.15, the distance is 0.4mm). And then, when the turbine wheel 21 revolves by the emission gas, the compressor wheel 31 revolves with the turboshaft 11, air sucked in an intake passage within the compressor housing 37 is pressurized and compressed, and the compressed air is shot into a combustion chamber.

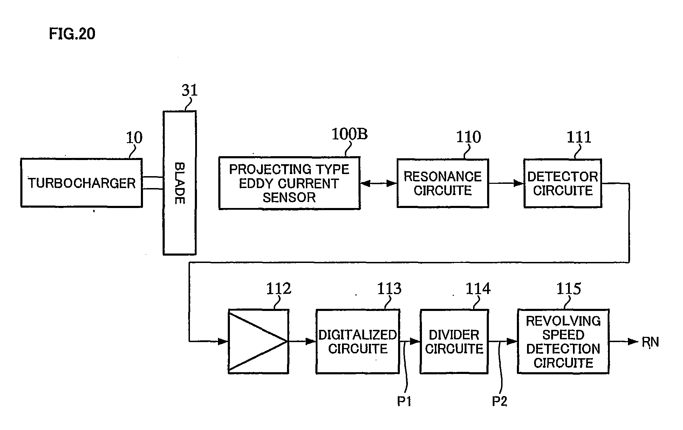

Further, FIG. 20 shows one example of a detection circuit that is connected to the eddy current sensor 100B and detects the number of revolutions of the turbocharger, the eddy current sensor 100B that is disposed proximal to the rotational plane of the blade of the compressor wheel 31 as described above, is driven by a resonance circuit 110 and simultaneously connected to a detector circuit 111 for extracting a signal component that varies according to a displacement caused by revolutions of the blade. The signal component extracted by the detector circuit 111, is amplified by an amplifier 112 and digitalized by a digitalized circuit (an A/D conversion circuit) 113 such as a comparator. The digitalized pulse signal P1 is divided by a divider circuit 114 and converted so as to output one pulse for example in the case of one revolution of the turbine. In this way, by counting the divided pulse P2, a revolving speed detection circuit (a counter) 115 can detect the number of revolutions of the turbine i.e. RN.

Here, the turbocharger 10 revolves in a very broad range from the vicinity of 10000- 20000rpm during the engine is idling to an ultrahigh- speed revolution at full load (for example, about 200000rpm) . The eddy current sensor 100B comprises the coil 102 as a magnetic field generation means and is equipped with the compressor housing 37 so as to face the compressor blade. It is preferable that a distance between the projecting ferrite core 101 of the eddy current sensor 100B and the compressor blade becomes approximate as much as possible in a range that the revolution of the compressor blade is not disturbed so that the eddy current sensor 100B can obtain an enough sensitivity, and for example this distance is set as a range of 0.5mm ∼ 0.9mm. In the eddy current sensor 100B of the present invention, since the ferrite core 101 projects from the coil 102, it is possible to get closer to the vicinity of the surface of the blade.

A resonance frequency of the resonance circuit 110 is set as a degree that is capable of detecting a fact that each blade passes through the magnetic field that is generated by the coil 102 of the eddy current sensor 100B based on the number of revolutions of the compressor blade. The coil 102 that is supplied by a high frequency current, generates magnetic flux in the thickness direction of the compressor housing 37 and forms a magnetic field. When the compressor wheel 31 revolves with the turbine wheel 21, each compressor blade that revolves, passes through the magnetic field that is generated by the coil 102 of the eddy current sensor 100B. At this time, an eddy current arises in each blade so as to cancel out the magnetic field generated by the coil 102. And then, when the strength of the magnetic field generated by the coil 102 varies with the eddy current that arises in each blade, by variation of the current value that flows in the coil 102, a thing that the eddy current arose in the compressor blade is detected, and an output voltage having a waveform shown in FIG.17 is obtained via the detector circuit 111. That is to say, by revolutions of the compressor wheel 31, the compressor blade gets closer to the sensor top portion of the eddy current sensor 110B or gets away from the sensor top portion of the eddy current sensor 110B, and a detection signal corresponding to this is outputted. The detection signal is amplified by the amplifier 112 and converted to the pulse signal P1 by the digitalized circuit. The pulse signal P1 is divided by the divider circuit 114 depending on the number of the compressor blades, for example divided so that one pulse is outputted in the case of one revolution of the compressor wheel 31. The pulse signal P2 that is divided by the divider circuit 114 is inputted to the revolving speed detection circuit 115, and the number of revolutions RN is outputted by counting the pulse signal P2. In this way, it is possible to accurately detect the number of revolutions of the turbocharger 10.

Moreover, the digitalized circuit 113, the divider circuit 114 and the revolving speed detection circuit 115 can be constructed by software. Further, as shown in FIG. 5, since the relationship between the oscillation voltage and the distance is not a proportional relationship, in the case of measuring the distance (the displacement), it is preferable to provide a front- end tier or rear- end tier of the amplifier with a linearized circuit to make the relationship between the oscillation voltage and the distance become a proportional relationship.

Explanation of Reference Numerals

| | |
|---|---|
| 1 | measurement section |
| 2 | cable |
| 3 | conductor plate (target) |
| 4 | sensor top portion |
| 10 | turbocharger |
| 11 | turboshaft |
| 12 | end portion |
| 13 | housing |
| 14 | bearing |
| 20 | turbine |
| 21 | turbine wheel |
| 22 | turbine entrance |
| 23 | turbine exit |
| 24 | turbine housing |
| 30 | compressor |
| 31 | compressor wheel |
| 32 | air entrance |
| 33 | air exit |
| 34 | fixing element |
| 35 | hexagon cap nut |
| 36 | adapter |
| 37 | compressor housing |
| 38 | clincher |
| 100 | eddy current sensor |
| 100A | plane type eddy current sensor |
| 100B | projecting type eddy current sensor |
| 101 | ferrite core |
| 102 | coil |
| 103 | lead wire |
| 110 | resonance circuit |
| 111 | detector circuit |
| 112 | amplifier |
| 113 | digitalized circuit (A/D conversion circuit) |
| 114 | divider circuit |
| 115 | revolving speed detection circuit (counter) |
| 120 | outer bushing |

**Claims**

1. An eddy current sensor that forms a resonance circuit comprised of a coil disposed proximal to a target and a capacitor and measures a displacement based on a change in voltage generated by a relative movement between said target and said coil, **characterized in that**:

   said eddy current sensor is formed by winding said coil on a columnar ferrite core.

2. An eddy current sensor according to claim 1, wherein with respect to said target, a surface of said coil and a surface of said ferrite core become the same plane.

3. An eddy current sensor according to claim 1, wherein with respect to said target, a front end of said ferrite core projects from a surface of said coil.

4. A turbocharger rotation detection apparatus for detecting revolutions of a turbocharger comprised of a turbine and a processor that a turbine wheel within said turbine and a compressor wheel within said compressor are connected by a turboshaft, **characterized in that**:

said turbocharger rotation detection apparatus equips said compressor with an eddy current sensor that is covered with a cylindrical outer bushing and formed by winding a coil on a columnar ferrite core, and simultaneously disposes so that a sensor top portion of said eddy current sensor is located proximal to a rotational surface of a blade of said compressor wheel, connects said eddy current sensor and a resonance circuit with a balanced type shield wire or coaxial cable, and detects a revolution speed of said turbocharger depending on a change in voltage of said eddy current sensor that is based on revolutions of said blade.

5. A turbocharger rotation detection apparatus according to claim 4, wherein with respect to said blade, a front end of said ferrite core projects from a surface of said coil.

6. A turbocharger rotation detection apparatus according to claim 4 or 5, wherein a detection circuit comprises a detector circuit that extracts a signal component from said resonance circuit and a digitalized circuit that amplifies said signal component extracted by said detector circuit by an amplifier and converts to a pulse signal.

7. A turbocharger rotation detection apparatus according to claim 6, wherein said pulse signal is divided, and one pulse is outputted with respect to for example one revolution of said turbocharger.

FIG.1

CABLE 2

SENSOR TOP PORTION 4

CONDUCTOR PLATE (TARGET) 3

$V_o$

$V_b$   $C_1$

MEASURING SECTION

FIG.2

$i_1$

$R_1$

$m = k\sqrt{L_1 L_2}$

$R_2$

$C_1$   $L_1$   $L_2$   $i_2$

RESONANCE COIL AND CAPACITOR

TARGET SIDE

FIG.3

$i_1$

$R_1$

$e$   $C_1$   $L_1$

FIG.4

$i_1$   $R$   A   $m$

$V_{AB}$   $C$   $R_1$   $R_2$   $i_2$

$L_1$   $L_2$

B

FIG.5

FIG.6

FIG.7

FIG.8

FIG.9

100

102        101

110

FIG.10

WITHOUT A FERRITE CORE          RANGE:40~45mV (P-P)

Tek STOP

Ch1    10.0mV      M 2.00ms    A  Ch1    6.40mV

FIG.11

WITH A FERRITE CORE                     RANGE:900∼1100mV (P-P)

FIG.12

FIG.13

SENSOR TOP

CONNECTOR

BALANCED TYPE
SHIELD WIRE

FIG.14

BLADE

100A

102    101         120

FIG.15

BLADE

100B

102    101         120

FIG.16

RANGE：350～400mV (P-P)

FIG.17

RANGE：900～1100mV (P-P)

FIG.18

FIG.19

ADMISSION

EMISSION

FIG.20

TURBOCHARGER 10 — BLADE 31 — PROJECTING TYPE EDDY CURRENT SENSOR 100B ↔ RESONANCE CIRCUITE 110 → DETECTOR CIRCUITE 111 →

→ 112 → DIGITALIZED CIRCUITE 113 (P1) → DIVIDER CIRCUITE 114 (P2) → REVOLVING SPEED DETECTION CIRCUITE 115 → RN

<table>
<tr><td colspan="2" align="center">**INTERNATIONAL SEARCH REPORT**</td><td colspan="2">International application No.<br>PCT/JP2012/052111</td></tr>
</table>

**A. CLASSIFICATION OF SUBJECT MATTER**
*G01P3/49*(2006.01)i, *G01B7/00*(2006.01)i, *G01D5/245*(2006.01)i

According to International Patent Classification (IPC) or to both national classification and IPC

**B. FIELDS SEARCHED**

Minimum documentation searched (classification system followed by classification symbols)
G01P3/49, G01B7/00, G01D5/245

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-198821 A (Nippon Soken, Inc.),<br>09 August 2007 (09.08.2007),<br>paragraphs [0012] to [0022], [0038]; fig. 1 to 3<br>& US 2007/0268014 A1 | 1-7 |
| Y | JP 2008-304471 A (Toshiba Corp.),<br>18 December 2008 (18.12.2008),<br>paragraphs [0010], [0094] to [0097]; fig. 1, 25<br>& US 2003/0067298 A1 & TW 241398 B<br>& KR 10-2001-0093678 A | 1-7 |
| Y | JP 03-135769 A (Hitachi Koki Co., Ltd.),<br>10 June 1991 (10.06.1991),<br>page 2, lower right column, lines 6 to 12;<br>fig. 1<br>(Family: none) | 7 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 February, 2012 (17.02.12) | Date of mailing of the international search report<br>28 February, 2012 (28.02.12) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 648 001 A1**

**REFERENCES CITED IN THE DESCRIPTION**

**Patent documents cited in the description**

- JP 2008506074 A
- JP 2007089336 A